# FASCICULE DE BREVET EUROPEEN

(11) **EP 3 337 045 B1**
(45) Date de publication et mention de la délivrance du brevet: **13.05.2020**
(21) Numéro de dépôt: 17207082.3
(22) Date de dépôt: 13.12.2017
(51) Int. Cl.: H04B 1/717

(54) **CONTROLE DU SPECTRE D'UNE ÉMISSION RF IMPULSIONNELLE PAR MISE EN FORME DES IMPULSIONS**
ÜBERWACHUNG DES SPEKTRUMS EINER HF-FELD-IMPULSEMISSION DURCH IMPULSFORMUNG
MONITORING OF THE SPECTRUM OF A PULSED RF TRANSMISSION BY PULSE SHAPING

(30) Priorité: 15.12.2016 FR 1601787
(43) Date de publication de la demande: 20.06.2018
(73) Titulaire: Thales, 92400 Courbevoie (FR)
(72) Inventeur: LETEMPLIER, Alain, 53005 Laval (FR); TAILLANDIER, Nicolas, 53005 Laval (FR)
(74) Mandataire: Bell, Mark

(56) Documents cités:
- US-A- 4 320 399
- US-A1- 2008 205 486

## Description

L'invention se situe dans le domaine des émissions RF (acronyme de radiofréquences) par impulsions, et porte plus précisément sur le contrôle du spectre d'émission de telles modulations. Elle s'applique en particulier aux modulations par impulsions utilisées dans le cadre des communications IFF (acronyme anglais pour « Interrogation Friend or Foe », ou identification ami ou ennemi).

Les transmissions IFF sont des transmissions utilisées en aéronautique dans la gamme de fréquence [1030 MHz - 1090 MHz] pour permettre aux radars d'approche, tant civils que militaires, de reconnaitre des avions « amis» et de déterminer leur cap et leur distance. Les émissions IFF sont basées sur des trains d'impulsions transmis à forte puissance. Les communications IFF peuvent se faire selon différents modes (civils selon l'OACI annexe 10 (acronyme anglais pour International Civil Aviation Organization) et militaires selon le STANAG 4193 (acronyme anglais pour NATO Standardization Agreements, ou accords de normalisation), et diffèrent selon que l'on se trouve en interrogation ou en réponse. Les informations sont transmises en faisant varier la largeur des impulsions, leurs écarts relatifs, et/ou en introduisant aux impulsions une couche de modulation (typiquement une modulation DPSK pour l'acronyme anglais Differential Phase Shift Keying, ou MSK pour l'acronyme anglais Minimum Shift Keying). Les largeurs des impulsions et les écarts entre impulsions sont typiquement de l'ordre de quelques centaines de nano secondes.

Les émissions IFF sont soumises à des contraintes importantes, définies entre autres par l'AIMS 03-1000b (acronyme anglais pour Air traffic control radar beacon system Identification friend or foe, Mark XII/XIIA System du département de la défense Américain), l'OACI annexe 10 volume IV, l'EUROCAE ED-73E (acronyme anglais pour EUROpean Organisation for Civil Aviation Equipment), ou la norme DO260B du RTCA (acronyme anglais pour Radio Technical Commission for Aeronautics). Ces normes définissent entre autres les gabarits spectraux et temporels que doivent respecter les impulsions des émissions IFF.

Le problème posé est donc celui de l'adéquation du signal émis à ces gabarits, tant dans le domaine temporel que dans le domaine fréquentiel, et ce pour l'ensemble des modes IFF sur l'ensemble de la gamme de températures de fonctionnement.

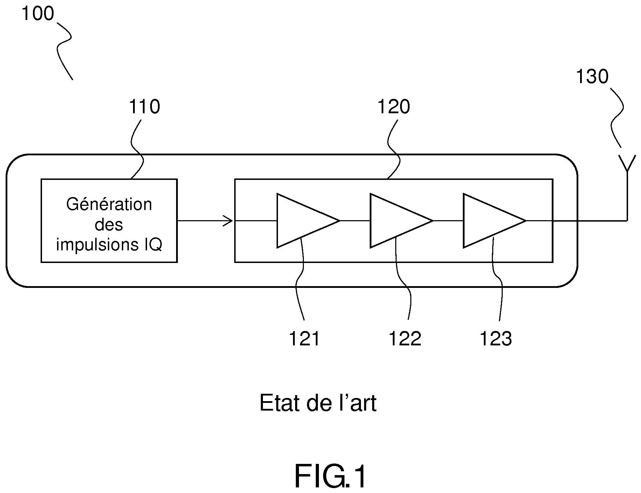

La figure 1 est une représentation macroscopique d'un émetteur IFF selon l'état de l'art. De tels émetteurs 100 comprennent généralement une partie numérique 110 de génération et de mise en forme du train d'impulsions, et une partie analogique 120 de transposition et d'amplification des impulsions, avant son émission sur l'antenne 130. La partie numérique délivre un signal IQ en bande de base ou sur fréquence intermédiaire. Cette génération peut également être réalisée à partir de composants analogiques, mais elle est dans ce cas plus complexe à mettre en œuvre et potentiellement plus bruitée, ce qui est un problème majeur de par l'amplification qui suit et qui amplifie indifféremment le signal utile et le bruit. La partie analogique 120 d'amplification du train d'impulsions réalise la conversion numérique analogique, la transposition du signal sur fréquence porteuse et son amplification avant émission. L'amplification du signal est réalisée par plusieurs étages 121, 122, 123 d'amplification successifs, afin d'augmenter progressivement l'amplitude et la puissance des impulsions sans y introduire de bruit. Les premiers étages utilisent des amplificateurs basse puissance à faible consommation et faible bruit, et prennent en entrée des impulsions de dynamique faible, tandis qu'à l'inverse, le dernier étage utilise un amplificateur haute puissance, généralement un amplificateur de classe C ou de classe AB utilisé proche de la saturation. La consommation des amplificateurs va de pair avec la puissance qu'ils délivrent.

Le respect des contraintes de gabarit spectral et temporel au niveau du signal généré par la partie numérique ne pose pas de problèmes particuliers dès lors que les composants utilisés disposent de la dynamique nécessaire. Cependant, les étages successifs d'amplification ont pour effet de déformer le signal. En particulier, ils ont tendance à redresser les fronts des impulsions, ce qui a pour effet de dégrader le spectre du signal émis.

Pour contenir les émissions dans le gabarit spectral souhaité, il est connu de moduler la tension d'alimentation du ou des derniers étages d'amplification de la chaîne d'émission analogique, en particulier durant les périodes correspondant aux fronts des impulsions. Ainsi, la puissance d'amplification associée à ces fronts est réduite, et les remontées de spectre contenues. Cette technique est implémentée dans des équipements anciens utilisant des amplificateurs bipolaires de classe C, comme par exemple le brevet US 4.320.399. Elle est cependant difficile à mettre au point et peu fiable, car les courants impulsionnels et les tensions d'alimentation sont très élevées (de l'ordre de plusieurs dizaines d'ampères pour les courants, et typiquement de 50 V pour les tensions). En effet, les fronts d'onde des impulsions ont une durée de l'ordre de quelques dizaines de nanosecondes, et il est délicat de manier avec précision des courants et tension élevées sur des intervalles de temps aussi réduits. De plus, si cette technique est applicable aux amplificateurs bipolaires, son application à d'autres types d'amplificateurs est plus problématique, car ces derniers sont conçus pour fonctionner sur une tension d'alimentation donnée : faire varier cette tension d'alimentation viendrait réduire de manière importante leur efficacité.

Cette technique présente également d'autres inconvénients : en faisant varier sa tension d'alimentation, le rendement de l'amplificateur de puissance est dégradé. Enfin, cette technique est instable lorsque la température de fonctionnement varie, de par les caractéristiques intrinsèques aux transistors bipolaires.

Une autre technique est celle utilisée par exemple dans le cadre des radars, qui consiste à anticiper les déformations créées dans les étages de puissance en générant des fronts d'onde plus étalés dès la génération du signal IQ bande de base. L'étalement supplémentaire des fronts d'onde est fait de manière à ce que les déformations apportées par les différents étages d'amplification leur donne la forme initialement recherchée. Cependant, cette technique requiert une caractérisation des déformations apportées par l'ensemble des étages d'amplification combinés, caractérisation qui varie également en fonction de la température de fonctionnement. De plus, si elle est adaptée au monde des radars, où les impulsions sont relativement espacées, elle ne peut être mise en œuvre dans le cadre de l'IFF, de part le faible écart entre les impulsions requis par certains mode qui ne permet pas d'étalement important des fronts d'onde.

Enfin, la technique la plus répandue consiste à introduire dans la chaîne d'émission un filtre passe bande, défini en fonction du gabarit spectral à respecter. Ce filtrage est généralement situé en sortie de l'étage d'amplification.

Si l'introduction d'un filtrage passe bande permet de s'assurer du respect des contraintes spectrales, cette technique présente elle aussi de nombreux inconvénients :
- par définition, le filtre n'a aucun effet sur la partie du spectre située dans sa bande passante du filtre, et des dépassements du gabarit spectral peuvent avoir lieu malgré le filtrage,
- l'énergie de la partie du spectre située hors bande passante du filtre va être réfléchie vers l'ampli en amont du filtre, ce qui a pour effet d'engendrer des déformations locales de la forme des impulsions venant dégrader le vecteur d'erreur du signal émis (en anglais Error Vector Magnitude, ou EVM), et donc dégrader le rapport signal à bruit de modulation du signal émis. Cet inconvénient est particulièrement marqué pour le mode 5 de l'IFF, utilisé dans le domaine militaire. Ce filtrage diminue également la fiabilité de l'étage de puissance situé en amont du filtre qui devra absorber les réflexions d'énergie non transmises par le filtre,
- le filtre passe bande introduit des pertes de puissances devant être compensées par une augmentation de la puissance des amplificateurs, et donc de la consommation de l'équipement ;
- la réalisation d'un tel filtre de puissance analogique est délicate, coûteuse et sensible aux variations de températures. De plus, le dimensionnement de l'ensemble des composants formant la chaîne d'amplification doit être revu de manière à compenser la perte de puissance liée au filtrage. Cela concerne en particulier le choix des amplificateurs de puissance, et augmente le coût global de la chaîne d'émission.

L'invention vise à proposer un dispositif d'émission et procédé associé permettant d'assurer le respect d'un gabarit spectral et de contraintes fortes sur les durées des fronts montants et descendants lors de l'émission d'un signal impulsionnel. Cette solution est adaptée en particulier aux émissions IFF, pour lesquelles les impulsions ne sont espacées que de quelques centaines de nanosecondes, ce qui ne permet pas de pouvoir limiter les remontées de spectre en étalant les fronts des impulsions.

A cet effet, l'invention décrit un dispositif d'émission radio d'un signal émis sous la forme d'une séquence d'impulsions. Le dispositif d'émission selon l'invention comprend une partie de génération desdites impulsions sur fréquence porteuse, et une chaîne analogique d'amplification des impulsions avant leur émission comprenant une pluralité d'étages d'amplification successifs. Le dispositif comprend également un module de génération d'un signal de commande de forme sensiblement trapézoïdale, ledit signal de commande étant appliqué en tant que tension de polarisation d'un amplificateur d'un étage de la chaîne d'amplification pour chacune des impulsions.

Avantageusement, l'amplificateur auquel le signal de commande est appliqué en tant que tension de polarisation est situé à l'avant dernier étage de la chaîne d'amplification.

Selon un mode de réalisation de l'invention, le signal émis est un signal IFF.

Selon un mode de réalisation de l'invention, les impulsions générées sont carrées.

Selon un mode de réalisation de l'invention, le signal de commande de forme sensiblement trapézoïdale comprend une zone de montée de durée

T_{R}, une zone de plateau de durée T_{P}, et une zone de descente de durée T_{F}. La longueur des impulsions générées est au moins égale à T_{R} + T_{P} + T_{F}. Avantageusement, les zones de rupture dudit signal de commande de forme sensiblement trapézoïdale sont lissées.

Selon un mode de réalisation, le module de génération du signal de forme sensiblement trapézoïdale est adapté pour appliquer au signal généré une prédistorsion au signal en fonction des caractéristiques du ou des étages d'amplification positionnés après l'étage d'amplification auquel il est appliqué en tant que tension de polarisation.

Avantageusement, l'amplificateur auquel le signal de commande est appliqué en tant que tension de polarisation est un amplificateur de type LDMOS.

Enfin, l'invention porte également sur un procédé de mise en forme d'un signal émis sous la forme d'une séquence d'impulsions dans un équipement radio comprenant un module de génération desdites impulsions sur fréquence porteuse et une chaîne analogique d'amplification des impulsions avant leur émission comprenant une pluralité d'étages d'amplification successifs. Le procédé comprend les étapes de :
- génération d'un signal de commande de forme sensiblement trapézoïdale, et
- application dudit signal de commande en tant que tension de polarisation d'un amplificateur d'un étage de la chaîne d'amplification pour chacune des impulsions.

L'invention sera mieux comprise et d'autres caractéristiques et avantages apparaîtront mieux à la lecture de la description qui suit, donnée à titre non limitatif, et grâce aux figures annexées parmi lesquelles :
- La figure 1 est une représentation macroscopique des différentes composantes d'un émetteur radio IFF ;
- La figure 2 présente un schéma de principe d'un dispositif selon un mode de réalisation de l'invention;
- La figure 3 représente une impulsion générée et la commande de polarisation d'un amplificateur associée dans un émetteur selon un mode de réalisation de l'invention ;
- La figure 4 est un exemple illustrant l'occupation spectrale d'un signal IFF en mode 4 interrogateur, lorsqu'émis par un émetteur selon l'état de l'art et par un émetteur selon un mode de réalisation de l'invention ;
- La figure 5 représente un diagramme d'état correspondant à un procédé de mise en forme d'un signal émis sous la forme d'une séquence d'impulsions selon l'invention.

Les exemples et figures présentées dans le document sont donnés uniquement à titre d'illustration. L'invention ne se limite donc pas aux exemples d'implémentation et illustrations représentées, mais à sa portée telle que définie par les revendications.

Le gabarit spectral des signaux de type impulsionnels est lié principalement à la structure des fronts montants et descendants des impulsions. Pour s'affranchir de l'utilisation d'un filtre passe bande en sortie de l'étage d'amplification, il convient donc de mettre en forme ces fronts d'onde, de manière à ce que l'impulsion émise soit compatible du gabarit spectral souhaité.

L'invention part du constat que, lorsque la mise en forme des fronts des impulsions est réalisée dès la génération du signal, elle est inefficace car les différents étages de la chaîne d'amplification ont tendance à redresser ces fronts et donc à augmenter l'encombrement spectral. En outre, les résultats obtenus sont soumis aux variations de la température de fonctionnement. Anticiper les redressements des fronts d'ondes liés aux étages d'amplification serait possible en augmentant leur durée, mais cette technique ne peut être mise en œuvre lorsque l'écart entre deux impulsions successives est faible, et n'est de ce fait pas adapté pour les transmissions IFF. En effet, en IFF, l'intervalle minimum entre deux impulsions est de 200 ns pour le mode 1 interrogateur et de 500ns pour le mode S répondeur. Par ailleurs, les durées des fronts de tous les modes sont limitées par les standards IFF : 50 ns à 100 ns pour les fronts montants, et 50 ns à 200 ns pour les fronts descendants.

S'il est possible de mettre en forme les fronts des impulsions en jouant sur la tension d'alimentation des amplificateurs, il est également possible de faire de même en faisant varier la tension de polarisation de ces amplificateurs. La modulation de la tension de polarisation des amplificateurs n'est pas une technique couramment employée, car ce faisant, le fonctionnement de l'amplificateur ne se fait plus selon une classe de fonctionnement donnée mais transite entre différentes classes en fonction de l'amplitude de la tension de polarisation appliquée sur sa grille.

L'ajustement de la puissance du signal émis opéré en faisant varier la tension de polarisation de l'amplificateur pose cependant le problème de l'utilisation de l'amplificateur dans des classes de fonctionnement pour lequel il n'a pas été conçu. En particulier, lorsque la tension de polarisation fait fonctionner l'amplificateur en classe A, l'intensité des courants de drain fait que celui-ci est susceptible de monter de manière importante en température, ce qui peut avoir pour effet de détériorer le composant. Néanmoins, cette utilisation reste possible dans le cadre de modulations par impulsions, où l'amplificateur ne fonctionne que par brèves intermittences.

L'invention propose donc de faire varier la tension de polarisation de l'un des amplificateurs de la chaîne d'émission sur les périodes correspondant aux fronts montants et descendants des impulsions, afin de les mettre en forme de manière à respecter un gabarit spectral donné.

Lorsque cette modulation de la tension de polarisation des amplificateurs est appliquée dans les premiers étages de la chaine d'amplification, elle ne produit pas ses pleins effets, car les étages ultérieurs vont redresser les fronts des impulsions, et donc dégrader l'encombrement spectral.

Lorsque cette modulation de la tension de polarisation des amplificateurs est appliquée au dernier étage de la chaîne d'amplification, qui est généralement un étage comprenant un amplificateur de forte puissance, elle est difficile à mettre en œuvre. En effet, les transistors de puissance, comme par exemple les transistors de type LDMOS (acronyme anglais pour Laterally diffused metal oxide semiconductor) particulièrement adaptés aux transmissions par impulsions, ne permettent pas d'obtenir une dynamique de contrôle de gain importante car la tension de polarisation injectée sur la grille est perturbée par le signal RF entrant sur la grille. Cette puissance RF entrante est généralement suffisamment forte pour influer sur la tension de polarisation, et ainsi faire passer l'amplificateur dans un mode de fonctionnement non souhaité. L'effet de la variation de la tension de polarisation sur l'amplitude du contrôle de gain est alors réduit, et donc incompatible avec un fonctionnement efficace de la fonction de mise en forme des impulsions. Ainsi, l'amplificateur auquel la modulation de la tension de polarisation est appliquée doit de préférence être situé dans un étage dont la puissance n'est pas trop élevée.

L'invention propose donc de contrôler le gabarit spectral du signal impulsionnel émis en modulant la polarisation d'un des amplificateurs de la chaîne d'amplification. L'amplificateur offrant le meilleur compromis entre adéquation des fronts des impulsions émises à un gabarit et capacité de maitrise de la tension de polarisation, est généralement celui qui précède le dernier étage d'amplification de puissance. L'invention propose de moduler la tension de polarisation de cet amplificateur par un signal de type trapézoïdal conçu en fonction d'un gabarit d'encombrement spectral et temporel du signal à émettre.

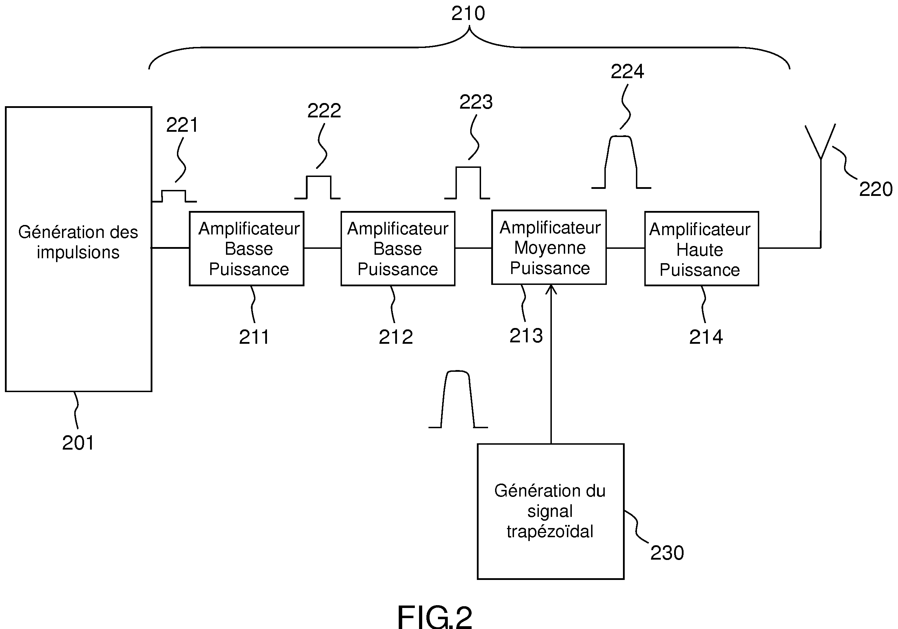

La figure 2 présente un schéma de principe d'un dispositif selon un mode de réalisation de l'invention.

Le signal IFF 221 en entrée de la chaîne d'amplification peut être généré par un module 201 à partir de signaux de modulation numérique en utilisant par exemple un générateur IQ ou un DSP (acronyme anglais pour Digital Signal Processor, ou processeur de signal numérique) couplé à un convertisseur numérique/analogique (CNA), ou directement en analogique. Il est ensuite transposé sur fréquence porteuse par un synthétiseur, et se présente sous la forme d'une série d'impulsions de faible puissance. Lorsque c'est nécessaire, on ajoute aux impulsions une couche de modulation DPSK ou MSK.

La chaîne d'amplification 210 comprend dans cet exemple précis quatre étages d'amplification successifs : 211, 212, 213 et 214. Les deux premiers amplificateurs 211 et 212 sont des amplificateurs basse puissance faible bruit, le troisième amplificateur 213 est un amplificateur moyenne puissance et le dernier amplificateur 214 est un amplificateur haute puissance. Le nombre d'amplificateurs utilisés est donné à titre d'illustration, l'invention s'appliquant de manière identique quel que soit le nombre d'étages d'amplifications.

Le signal IFF 221 généré par le module 201 est successivement amplifié par les différents étages 210 de la chaîne d'amplification avant d'être émis sur l'antenne 220. Dans l'exemple, la modulation de la tension de polarisation est appliquée à l'amplificateur moyenne puissance 213, c'est-à-dire l'amplificateur immédiatement situé en amont de l'amplificateur haute puissance 214 de fin de chaîne d'amplification. Sa tension de polarisation est contrôlée par le biais d'un signal de commande généré par le générateur 230, qui peut être généré numériquement puis converti par un convertisseur numérique/analogique, ou directement en analogique. Il est de forme sensiblement trapézoïdale, et sa structure est fonction du gabarit temporel souhaité des impulsions. Ce signal doit être le plus exempt de bruit possible, car son contenu spectral va se retrouver transposé autour de la porteuse du signal RF, et donc dans le spectre du signal émis. Avantageusement, ce signal est exempt de signaux parasites (en anglais spurious) tels que des produits d'intermodulation d'ordre supérieur à un, de manière à pouvoir s'affranchir de l'implémentation d'un filtre passe bande en sortie de la chaîne d'amplification.

Le signal de commande de la tension de polarisation est appliqué à l'amplificateur de moyenne puissance de manière à mettre en forme chacune des impulsions, et en particulier les parties des impulsions relatives aux fronts montants et descendants. C'est cette sur-modulation des impulsions qui va garantir l'adéquation du signal émis aux contraintes normatives.

Comme indiqué précédemment, la modulation de la tension de polarisation peut être faite à n'importe quel étage de la chaîne d'amplification, mais ne produira pleinement ses effets sur les fronts des impulsions émises que si l'amplificateur concerné se situe en fin de chaîne d'émission. Lorsque l'amplificateur de fin de chaine d'amplification est un amplificateur de trop forte puissance, elle peut avantageusement être mise en œuvre sur l'amplificateur situé en amont de celui-ci.

Dans un exemple d'implémentation décrit en figure 2, et dans le cadre d'une transmission IFF, cet amplificateur est l'amplificateur moyenne puissance 213, pouvant être par exemple un amplificateur LDMOS. Le choix de l'amplificateur LDMOS provient de ce que les amplificateurs de cette famille sont faciles à contrôler en gain par leur polarisation de grille, et ce avec une dynamique suffisante. Néanmoins, l'amplificateur pourrait être d'un autre type, comme par exemple un amplificateur bipolaire, ou GaN (acronyme pour nitrure de gallium) avec une commande de polarisation adaptée.

La tension de polarisation de grille appliquée au transistor étant du type par impulsions, le transistor LDMOS va travailler dans une classe de fonctionnement allant de la classe C à la classe A selon l'amplitude de polarisation de grille. Entre les impulsions, le transistor verra sa polarisation de grille à 0V, il sera alors dans un état non polarisé, son courant de polarisation de drain sera nul. Un autre avantage des amplificateurs LDMOS est qu'ils requièrent une polarisation de grille positive de faible amplitude comprise entre 0 et 5 V. La génération d'un signal ayant une telle dynamique ne pose pas de problèmes particuliers. La dynamique du signal trapézoïdal de commande de la polarisation de grille de l'amplificateur est choisie en fonction du gabarit spectral à respecter pour le signal émis. Dans le cadre d'un signal IFF, le gabarit spectral est défini jusqu'à des atténuations de - 80 dBc. L'amplitude du signal de polarisation de l'amplificateur moyenne tension doit alors faire varier le gain de l'amplificateur d'une vingtaine de dB minimum pour produire un effet optimal sur l'encombrement spectral.

L'étage final 214 de puissance est stabilisé en gain, et avantageusement utilisé au voisinage de son point de compression.

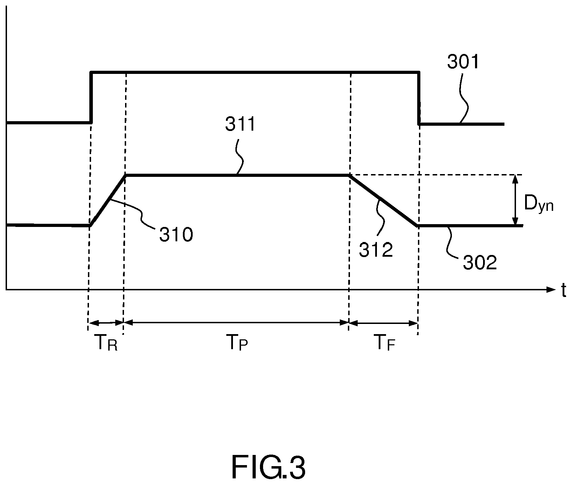

La figure 3 représente une impulsion générée et la commande de polarisation d'un amplificateur associée dans un émetteur selon un mode de réalisation de l'invention.

Le signal 301 correspond à l'enveloppe de l'impulsion RF, telle que générée par la partie de génération du signal 201, et telle qu'elle se présente en entrée de l'amplificateur de moyenne puissance 213 dont la tension de polarisation est commandée. Elle se décompose en trois périodes : une première période de durée T_{R}, correspondant à son front montant, une deuxième période de durée T_{P}, correspondant à la partie utile et de pleine puissance de l'impulsion, et une troisième période de durée T_{F}, correspondant au front descendant de l'impulsion.

Pour respecter les contraintes liées à la transmission d'un signal IFF, la durée T_{R} du front montant doit être comprise entre 50 ns et 100 ns, et la durée T_{F} du front descendant doit être comprise entre 50 ns et 200 ns. La durée T_{P} de la partie utile de l'impulsion dépend du mode de fonctionnement choisi.

Le signal 301 est généré sous la forme d'une impulsion carrée dont la durée est égale à la somme des durées T_{R}, T_{P} et T_{F}. En générant une impulsion carrée, il n'y a pas de phénomènes de redressements des fronts dans les étages successifs d'amplification. Les impulsions résultant de la sur-modulation d'une porte par le signal de polarisation de l'amplificateur ont une forme qui est alors directement liée à la forme du signal de polarisation. Lorsque les impulsions comprennent une partie utile modulée DPSK ou MSK, cette partie utile doit être décalée de manière à être positionnée sur la zone correspondant à la partie utile et de pleine puissance de l'impulsion émise, de durée T_{P}.

Le signal 302 représente le signal trapézoïdal utilisé pour ajuster la tension de polarisation de l'amplificateur moyenne puissance 213 de manière à sur-moduler les impulsions émises. Ce signal doit être synchronisé avec le traitement des impulsions par l'amplificateur de moyenne puissance. La forme trapézoïdale du signal de commande 302 comprend une zone de plateau 311 correspondant au sommet du trapèze, sur toute la période T_{P} relative à la partie utile de l'impulsion, de manière à ce que l'amplificateur délivre sa pleine puissance durant cette période utile. Il comprend également une zone de montée 310 et une zone de descente 312 dans lesquelles le signal suit une pente linéaire, garantissant ainsi une montée/descente progressive en puissance de l'amplificateur. L'aspect linéaire de ces montées/descentes permet de concentrer le spectre autour de la fréquence porteuse, et donc de respecter le gabarit spectral imposé.

Afin que le signal émis présente un encombrement spectral optimal, il convient d'éviter les ruptures de pente au voisinage du sommet des impulsions, car celles-ci créent des discontinuités venant élargir le spectre. A cet effet, les zones de rupture du signal de commande, c'est-à-dire les parties correspondant à la jonction entre le front de montée 310 et le plateau du trapèze 311, ainsi que la jonction entre le plateau du trapèze 311 et le front de descente 312, peuvent être lissées pour être rendues plus progressives. Le lissage de la zone de rupture située entre le front de montée et le plateau du trapèze peut être obtenu par un filtrage passe-bas appliqué au signal de commande 302, lorsqu'il est généré de manière analogique, en utilisant la capacité de jonction grille-source du LDMOS associée à la résistance série de sortie du buffer de génération par exemple. Le lissage de la zone de rupture située entre le plateau du trapèze et le front de descente peut être obtenu avec une modulation appropriée du courant de décharge lorsque la formation du signal trapézoïdal est générée de manière analogique à l'aide de générateurs de courant contrôlés. Lorsque le signal trapézoïdal est généré de manière numérique, les jonctions arrondies peuvent être directement modélisés au niveau du convertisseur numérique analogique.

Dans le cadre des transmissions IFF, lorsque la modulation de la tension de polarisation de l'amplificateur est appliquée sur l'avant dernier étage de la chaîne d'amplification, le signal de commande 302 nécessite un dispositif de génération ayant une bande passante de l'ordre de 10 MHz pour respecter la forme voulue.

Avantageusement, les impulsions 301 peuvent être élargies lors de leur génération au-delà des durées associées aux fronts montants et descendants, le signal 302 de commande de la polarisation de l'amplificateur de moyenne puissance permettant de ramener ces impulsions dans le gabarit temporel imposé. Leur durée totale est alors supérieure à T_{R} + T_{P} + T_{F}.

Avantageusement, les paramètres définissant le signal 302 de contrôle de la polarisation de l'amplificateur moyenne puissance (amplitude, pentes, ...) peuvent également être ajustés en fonction de la température de fonctionnement de l'émetteur, pour en compenser les effets. Elles peuvent également être ajustées afin d'anticiper sur les redressements des fronts qu'opérera le dernier étage d'amplification de puissance, en caractérisant la réponse de l'amplificateur de puissance 214, en appliquant au signal de commande trapézoïdal une pré-distorsion adaptée pour compenser les distorsions introduites par ce dernier.

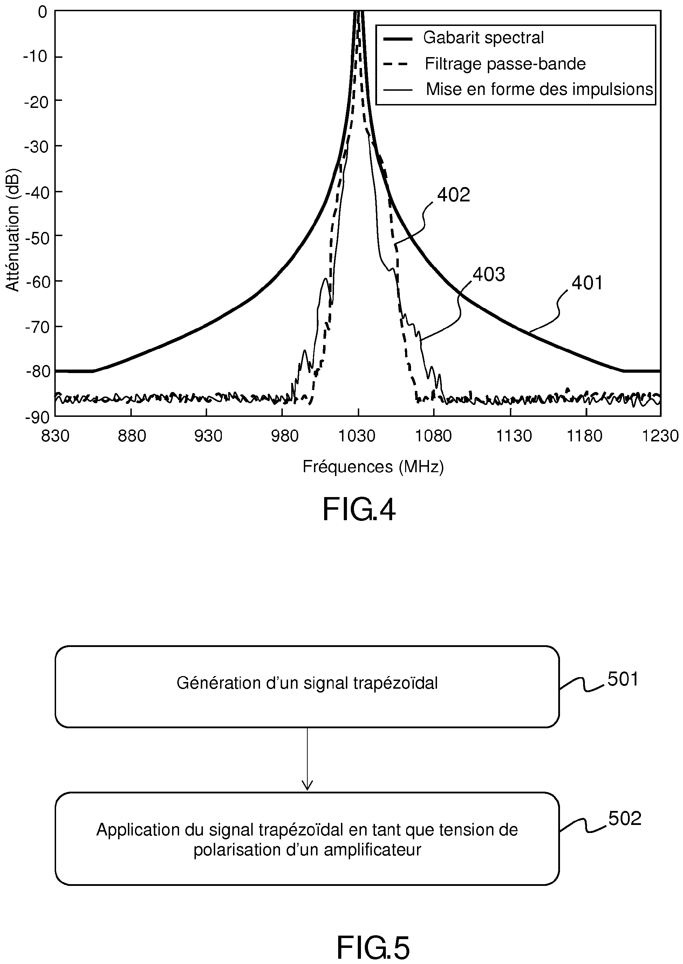

La figure 4 est un exemple illustrant l'occupation spectrale d'un signal IFF en mode 4 interrogateur, lorsqu'émis par un émetteur selon l'état de l'art et par un émetteur selon un mode de réalisation de l'invention.

La courbe 401 représente le gabarit spectral que doit satisfaire le signal émis.

La courbe 402 représente le spectre d'une émission IFF selon l'état de l'art, dans laquelle le signal a été filtré par un filtre passe bande de puissance positionné en sortie d'émission. On observe que le gabarit spectral n'est pas respecté aux alentours de 1045 MHz, le spectre du signal émis étant en dehors du gabarit spectral.

La courbe 403 représente le spectre d'une même émission IFF, lorsqu'elle a été générée par un émetteur selon un mode de réalisation de l'invention, dans lequel la puissance d'un étage d'amplification situé en amont de l'étage final de puissance a été modulée de manière à ce que les impulsions émises s'insèrent dans le masque spectral 401. On observe que le gabarit spectral du signal est respecté sur l'ensemble de la bande [830 MHz - 1230 MHz].

L'invention répond bien au besoin voulu d'adéquation entre le signal émis et un gabarit fréquentiel.

Enfin, la figure 5 représente un diagramme d'état correspondant à un procédé de mise en forme d'un signal émis sous la forme d'une séquence d'impulsions selon l'invention, procédé pouvant avantageusement être mis en œuvre lors de l'émission d'un signal IFF devant satisfaire des contraintes d'encombrement spectral et temporel. Le procédé est mis en œuvre dans un émetteur comprenant une partie dédiée à la génération du signal et à sa transposition sur fréquence porteuse, et une chaîne analogique d'amplification à plusieurs étages du signal avant son émission. Le procédé comprend une étape 501, mise en œuvre par le biais d'un équipement numérique de génération de signal IQ puis de conversion numérique/analogique, ou directement par le biais d'un montage analogique, de génération d'un signal de commande de forme sensiblement trapézoïdale tels que les signaux décrits en figure 3 référence 302 et 303. Il comprend également une étape 502 de modulation des impulsions avant leur émission par le biais du contrôle de la tension de polarisation d'un des amplificateurs de la chaîne d'amplification positionné dans un étage précédant le dernier étage (c'est-à-dire précédent l'étage de puissance), de préférence l'étage positionné directement avant le dernier étage. Le signal de commande doit être appliqué à l'amplificateur de manière synchronisée avec l'amplification de chacune des impulsions générées.

Cette étape de contrôle de la polarisation de l'amplificateur moyenne puissance permet de sur-moduler le signal avant son émission, de manière à ce qu'il respecte des contraintes temporelles durant les fronts montants et descendants de l'impulsion, et des contraintes d'encombrement spectral.

Le dispositif d'émission, et procédé associé, d'un signal de type impulsionnel selon l'invention se distingue de l'état de la technique en ce que :
- il permet de garantir le respect de contraintes de mise en forme temporelle du signal imposées par un gabarit : en effet, les temps de montée et de descente des impulsions émises sont réglables, car ils sont directement liés aux temps de montée et de descente du signal de commande trapézoïdal généré. Cette propriété garanti le respect de gabarits temporels d'émission ;
- il permet de garantir le respect de contraintes d'occupation spectrale imposées par un gabarit spectral : en mettant en forme les fronts montant et descendants des impulsions le plus tard possible dans la chaîne d'amplification, seul le dernier étage est susceptible de redresser ces fronts, et donc de dégrader l'occupation spectrale. Les dégradations apportées par cet amplificateur peuvent être, dans une certaine mesure, caractérisés et anticipés en modifiant à l'inverse la structure des fronts montants et descendants du signal trapézoïdal de polarisation de l'amplificateur, ce qui est impossible lorsqu'il s'agit de modéliser les effets combinés de plusieurs étages d'amplificateurs cascadés et des variations de température ;
- il ne nécessite pas le maniement de courants de forts niveaux de puissance, contrairement aux techniques connues de variation de la tension d'alimentation du dernier étage d'amplification ;
- il ne nécessite pas l'ajout d'un filtre passe bande de puissance coûteux en termes de coût de fabrication, d'énergie consommée, et sensible aux variations de températures, ce qui rend le dispositif économique et fiable. La puissance de l'étage de sortie peut alors être réduite au maximum ;
- les impulsions ne présentent pas de déformations localisées sur la partie utile, contrairement aux dispositifs implémentant des fonctions de filtrage passe bande en sortie d'amplification de puissance, ce qui améliore la qualité du signal émis, et en particulier l'EVM ;
- le dispositif est compatible de n'importe quel type d'étage d'amplification en sortie (amplificateur de classe C, de classe AB, à puissance variable) ;
- le dispositif peut être couplé avec des techniques de contrôle de puissance crête en agissant en plus sur l'amplitude de la zone plate du signal de commande trapézoïdal.

## Revendications

1. Dispositif d'émission radio d'un signal émis sous la forme d'une séquence d'impulsions, ledit dispositif comprenant une partie (201) de génération desdites impulsions (301) sur fréquence porteuse, une chaîne analogique d'amplification des impulsions avant leur émission (210) comprenant une pluralité d'étages d'amplification successifs (211, 212, 213, 214), un module (230) de génération d'un signal de commande de forme trapézoïdale (302), et **caractérisé en ce que** ledit signal de commande est appliqué en tant que tension de polarisation d'un amplificateur (213) d'un étage de la chaîne d'amplification pour chacune des impulsions.

2. Dispositif selon la revendication 1, dans lequel l'amplificateur auquel le signal de commande est appliqué en tant que tension de polarisation est situé à l'avant dernier étage (213) de la chaîne d'amplification.

3. Dispositif selon l'une des revendications précédentes, dans lequel le signal émis est un signal IFF.

4. Dispositif selon l'une des revendications précédentes, dans lequel les impulsions générées sont carrées (301).

5. Dispositif selon l'une des revendications précédentes, dans lequel le signal de commande de forme sensiblement trapézoïdale comprend une zone de montée (310) de durée T_{R}, une zone de plateau (311) de durée T_{P}, et une zone de descente (312) de durée T_{F}, et dans lequel la longueur des impulsions générées (301) est au moins égale à T_{R} + T_{P} + T_{F}.

6. Dispositif selon l'une des revendications précédentes, dans lequel des zones de rupture dudit signal de commande de forme sensiblement trapézoïdale sont lissées.

7. Dispositif selon l'une des revendications précédentes, dans lequel ledit module de génération (230) d'un signal de forme sensiblement trapézoïdale est adapté pour appliquer au signal généré une prédistorsion au signal en fonction des caractéristiques du ou des étages d'amplification (214) positionnés après l'étage d'amplification (213) auquel il est appliqué en tant que tension de polarisation.

8. Dispositif selon l'une des revendications précédentes, dans lequel l'amplificateur auquel le signal de commande est appliqué en tant que tension de polarisation est un amplificateur de type LDMOS.

9. Procédé de mise en forme d'un signal émis sous la forme d'une séquence d'impulsions dans un équipement radio comprenant un module (201) de génération desdites impulsions (301) sur fréquence porteuse et une chaîne analogique d'amplification des impulsions avant leur émission (210) comprenant une pluralité d'étages d'amplification successifs (211, 212, 213, 214), le procédé comprenant une étape de :
• génération d'un signal de commande de forme trapézoïdale (302), et étant **caractérisé par**:
• application dudit signal de commande en tant que tension de polarisation d'un amplificateur (213) d'un étage de la chaîne d'amplification pour chacune des impulsions.

## Patentansprüche

1. HF-Sendevorrichtung eines in Form einer Impulsfolge gesendeten Signals, wobei die Vorrichtung einen Abschnitt (201) zur Erzeugung der Impulse (301) auf einer Trägerfrequenz, eine analoge Kette zur Verstärkung der Impulse vor ihrer Sendung (210), welche eine Vielzahl von aufeinanderfolgenden Verstärkungsstufen (211, 212, 213, 214) beinhaltet, ein Erzeugungsmodul (230) eines Steuersignals mit trapezoidaler Form (302) beinhaltet, und **dadurch gekennzeichnet, dass** das Steuersignal als eine Polarisationsspannung eines Verstärkers (213) einer Stufe der Verstärkungskette für jeden der Impulse angelegt wird.

2. Vorrichtung nach Anspruch 1, bei welcher der Verstärker, an welchen das Steuersignal als Polarisationsspannung angelegt wird, an der vorletzten Stufe (213) der Verstärkungskette befindlich ist.

3. Vorrichtung nach einem der vorhergehenden Ansprüche, bei welcher das gesendete Signal ein IFF-Signal ist.

4. Vorrichtung nach einem der vorhergehenden Ansprüche, bei welcher die erzeugten Impulse quadratisch (301) sind.

5. Vorrichtung nach einem der vorhergehenden Ansprüche, bei welcher das Steuersignal mit trapezoidaler Form einen Anstiegsbereich (310) mit einer Dauer T_{R}, einen Plateaubereich (311) mit einer Dauer T_{P} und einen Abstiegsbereich (312) mit einer Dauer Tp beinhaltet und bei welcher die Länge der erzeugten Impulse (301) mindestens gleich T_{R} + T_{P} + T_{F} ist.

6. Vorrichtung nach einem der vorhergehenden Ansprüche, bei welcher Abbruchbereiche des Steuersignals mit trapezoidaler Form geglättet sind.

7. Vorrichtung nach einem der vorhergehenden Ansprüche, bei welcher das Modul zur Erzeugung (230) eines Signals mit trapezoidaler Form geeignet ist, um auf das erzeugte Signal eine Signal-Vorverzerrung entsprechend den Merkmalen der Verstärkungsstufe(n) (214) anzuwenden, welche nach derjenigen Verstärkungsstufe (213) positioniert ist/sind, an welche es als Polarisationsspannung angelegt wird.

8. Vorrichtung nach einem der vorhergehenden Ansprüche, bei welcher der Verstärker, an welchen das Steuersignal als Polarisationsspannung angelegt wird, ein Verstärker vom Typ LDMOS ist.

9. Formgebungsverfahren eines Signals, welches in der Form einer Impulsfolge in einer Funkausrüstung gesendet wird, beinhaltend ein Modul (201) zur Erzeugung der Impulse (301) auf einer Trägerfrequenz und eine analoge Kette zur Verstärkung der Impulse vor ihrer Sendung (210), welche eine Vielzahl von aufeinanderfolgenden Verstärkungsstufen (211, 212, 213, 214) beinhaltet, wobei das Verfahren folgenden Schritt beinhaltet:
• Erzeugen eines Steuersignals mit trapezoidaler Form (302),
und **dadurch gekennzeichnet, dass** es den folgenden Schritt beinhaltet:
• Anlegen des Steuersignals als Polarisationsspannung eines Verstärkers (213) einer Stufe der Verstärkungskette für jeden der Impulse.

## Claims

1. A device for radio transmission of a signal transmitted in the form of a pulse sequence, said device comprising a part (201) for generating said pulses (301) on a carrier frequency, an analog chain for amplifying the pulses before their transmission (210) comprising a plurality of successive amplification stages (211, 212, 213, 214), a module (230) for generating a control signal of trapezoidal shape (302), and **characterized in that** said control signal is applied as the bias voltage of an amplifier (213) of a stage of the amplification chain for each of the pulses.

2. Device according to claim 1, wherein the amplifier to which the control signal is applied as a bias voltage is located at the penultimate stage (213) of the amplification chain.

3. Device according to one of the preceding claims, in which the transmitted signal is an IFF signal.

4. Device according to one of the preceding claims, in which the pulses generated are square (301).

5. Device according to one of the preceding claims, in which the trapezoidal control signal comprises a ramp up zone (310) of duration T_{R}, a plateau zone (311) of duration T_{P}, and a ramp down zone (312) of duration T_{F}, and in which the length of the pulses generated (301) is at least equal to T_{R} + T_{P} + T_{F}.

6. Device according to one of the preceding claims, in which rupture zones of said trapezoidal control signal are smoothed.

7. Device according to one of the preceding claims, wherein said module for generating (230) a trapezoidal signal is adapted to apply a predistortion to the generated signal as a function of the characteristics of the amplification stage(s) (214) positioned after the amplification stage (213) to which it is applied as a bias voltage.

8. Device according to one of the preceding claims, in which the amplifier to which the control signal is applied as a bias voltage is an LDMOS type amplifier.

9. A method of shaping a signal transmitted in the form of a pulsesequence in radio equipment comprising a module (201) for generating said pulses (301) on a carrier frequency and an analog chain for amplifying the pulses before their transmission (210) comprising a plurality of successive amplification stages (211, 212, 213, 214), the method comprising a step of:
• generation of a control signal of trapezoidal shape (302),
and being **characterized in that** it comprises a step of:
• application of said control signal as the bias voltage of an amplifier (213) of a stage of the amplification chain for each of the pulses.
